# EUROPEAN PATENT APPLICATION

(11) **EP 0 989 037 A1**
(43) Date of publication of application: **29.03.2000**
(21) Application number: 99113706.8
(22) Date of filing: 13.07.1999
(51) Int. Cl.: B60R 25/02

(54) **Vehicle anti-theft device in the form of a steering wheel cover adaptable to a steering wheel with play**

(30) Priority: 28.07.1998 IT MI981754
(71) Applicant: Lenoci, Cosimo, 20142 Milano (IT)
(72) Inventor: Lenoci, Cosimo, 20142 Milano (IT)
(74) Representative: Zavattoni, Maria Chiara

(57) **Abstract**

The steering wheel cover comprises a number of slats or plates (12a, ..., 12n), each of which has the approximate shape of a sector of a circle, and all of which are linked to one another at a centre (14) so that they can rotate around said centre. fan out from one another and close over one another. Each slat has a U-shaped cross section and a radius at least slightly larger than the radius of the steering wheel. The first and last slat are equipped with lock mechanisms (20) to lock them together.

When fitted over a steering wheel, opened and locked, the steering wheel cover prevents the steering wheel from being accessed or turned, and therefore is a deterrent to theft.

## Description

The invention relates to the field of anti-theft devices for motor vehicles.

Various types of vehicle anti-theft devices are known in the field. One example is represented by steering locks, which immobilise the steering wheel. However, after their initial success, these devices proved to be easily opened by criminals intent on stealing a vehicle.

It was therefore decided to develop a device that effectively discourages thieves from stealing a vehicle.

This objective is achieved by the device described in claim 1.

Other new and useful characteristics are described in the subsequent claims.

The new device basically comprises a number of rigid slats or plates with a U-shaped cross section designed to fit and close round a steering wheel, a considerable gap being left between their inner surface and the wheel so that when the anti-theft device is applied, it prevents access to the steering wheel and remains idle on it, thus preventing the vehicle from being steered.

The new device will be easy to use, and will constitute an effective deterrent to vehicle theft.

A currently preferred embodiment is described below, by reference to the annexed drawings in which:

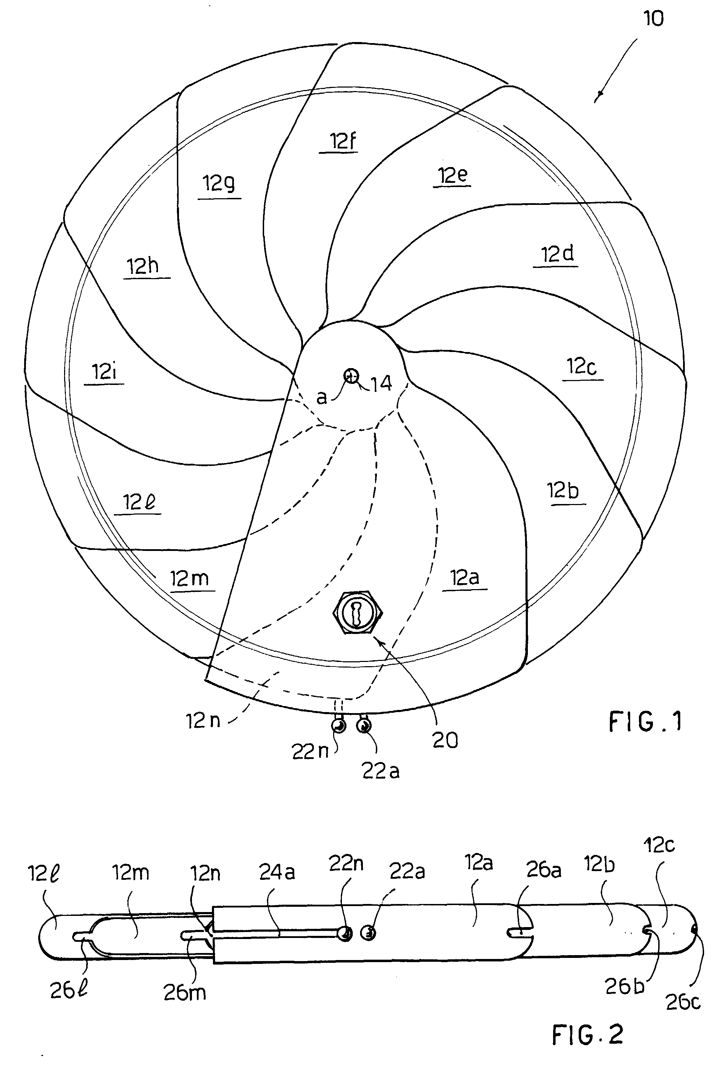

Figure 1 is a front view on a reduced scale of the device according to the invention, fitted to a steering wheel;
Figure 2 is a bottom view of the device illustrated in figure 1;
Figure 3 is a cross-section of a slat on a radial plane;
Figure 4 is a rear view of the device; the device is shown in the same position as shown in figure 1, but the steering wheel has been omitted for the sake of clarity;
Figure 5 is a perspective view of the device in a retracted position at the beginning of its application to a steering wheel;
Figure 6 shows the device of figure 5, in an extended position around the steering wheel; some parts of the device are drawn in a broken-away form to show part of the steering wheel.

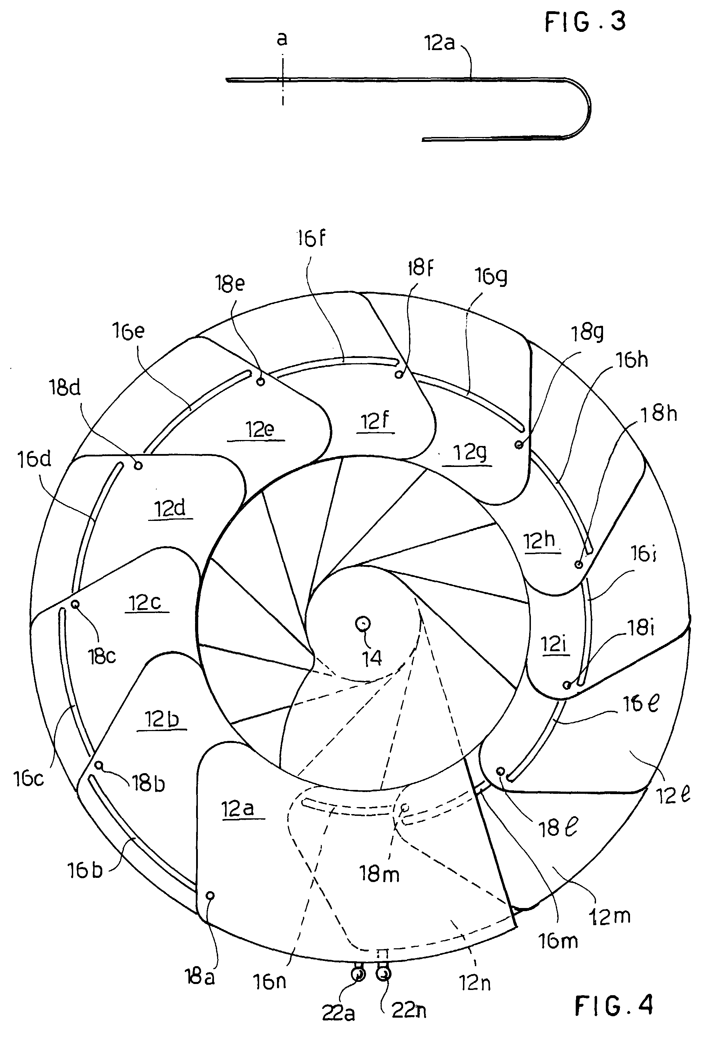

The anti-theft assembly in accordance with the invention is referenced 10 in the Figures. It comprises a number of rigid slats or plates 12, identified as 12a, 12b, 12c, 12d, 12e, 12f, 12g, 12h, 12i, 12l, 12m and 12n, which are connected to one another by a pivot 14, generally a rivet, a nail, or the like, with axis a . The overall shape of each slat 12 in front view is that of a sector of a circle, in which one of the sides preferably has a protuberance, or rather a convex curved shape, and each slat has a U-shape in cross-sectional view, as shown in Figure 3 in particular. The slats can swivel around pivot 14 so that they can fan out from one another by rotating around axis a and close on one another by inverse rotation around axis a. The rotation of each slat may be limited in any suitable way; for example, as shown in Figure 4, each slat can have radially staggered grooves or slots and groove engaging pins. Each groove on each slat is identified by reference 16 and a letter: slat 12a has no groove, the groove in slat 12b is referenced 16b, the groove in slat 12c is referenced 16c, etc.

Each groove-engaging pin is identified by reference 18 and a letter; thus a pin on slat 12a is referenced 18a, a pin on slat 12b is referenced 18b, etc.

In the example shown in Figure 4, the extension-limiting grooves and the corresponding pins are located in the rear portion of the U-shaped section of the slats. If preferred, they could be located in the front portion. Other systems for limiting fan-like opening of slats could also be devised within the scope of the invention.

The function of the convex curved protuberances is to allow the layers of sheet metal to overlap, which provides additional protection against tampering or violation of the device.

The outermost slats 12a and 12n are equipped with mutual engaging and locking devices, namely a lock referenced 20, which is not described in detail as it may be of any type known in the art.

Said outermost slats 12a and 12n are preferably equipped with handles or knobs shown as 22a and 22n respectively, which project radially to facilitate opening and closing of the steering wheel cover. Knob 22a is preferably carried centrally by the peripheral part of slat 12a, and knob 22n is moved onto the outermost part of slat 12n. Slat 12a has a groove 24a to allow knob or handgrip 22n to pass through. Equally, all the slats preferably contain another groove 26, said grooves being referenced 26a for slat 12a, 26b for slat 12b, and so on, said grooves for receiving a stem of knob 22, to allow the device to have a more compact shape in the retracted position.

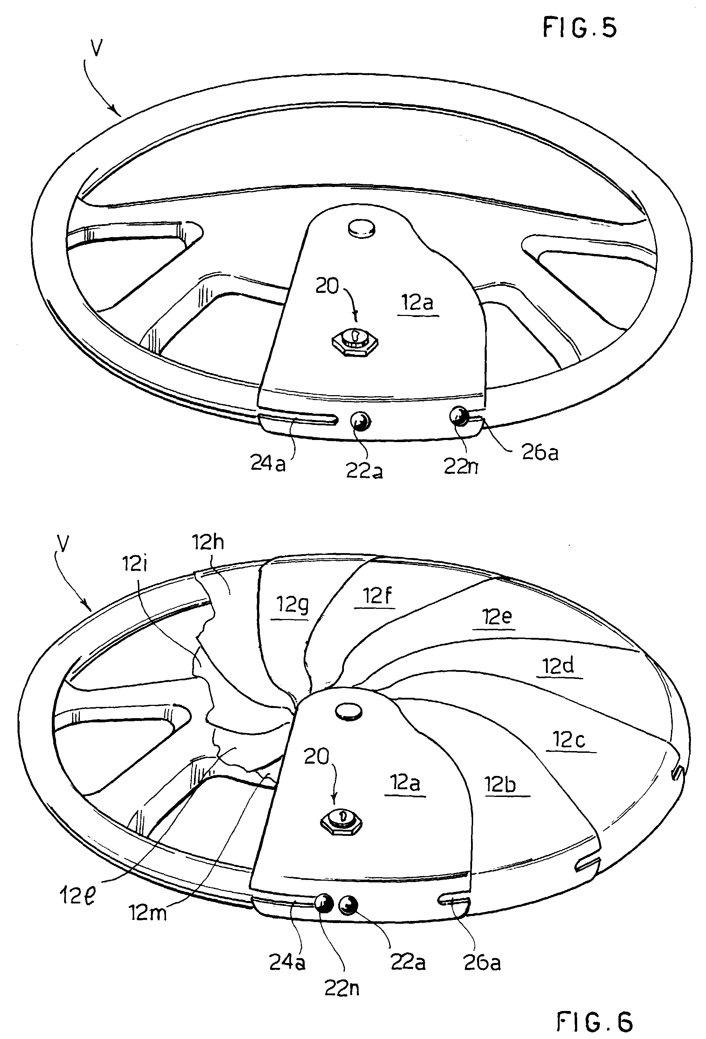

The way to apply the device to a steering wheel, referenced V, is shown in figures 5 and 6. While in the retracted position, with the slats overlapping, the device is fitted to a peripheral part of the steering wheel as shown in figure 5. Then, possibly using knobs 22a and 22n, the slats are fanned out or rotated to arrange them evenly round the steering wheel as shown in figure 6, thus covering it completely. The first slat 12a is then secured to the last slat 12n with lock 20. The steering wheel is now firmly enclosed in a rigid casing having a larger diameter than the steering wheel diameter, so that it is impossible to turn the steering wheel by turning wheel cover 10.

Device 10 could be made of any suitably strong, rigid material, such as sheet steel.

## Claims

1. An anti-theft device for a vehicle equipped with a steering wheel, characterised in that it comprises a rigid casing for the steering wheel, said casing forming a seat for the steering wheel, the seat being larger in diameter and height than the steering wheel, so to receive said steering wheel with play.

2. A device according to claim 1, characterised in that said casing comprises a number of rigid slats (12a, 12b, 12c......12n) hinged to one another on an axis a, said slats being movable with respect to each other between a retracted position, in which they substantially overlap, to take up as little space as possible, and an extended position in which they define a circular inner compartment that constitutes said seating designed to house the steering wheel.

3. A device according to claim 2, characterised in that the shape of each slat (12a, 12b, ..., 12n) is approximately that of a sector of a circle.

4. A device according to claim 2, characterised in that each slat (12a, 12b, 12..., 12n) is in the shape of a sector of a circle with a convex curved wall.

5. A device according to claim 2, characterised in that said slats are made of sheet metal.

6. A device according to claim 2, characterised in that said slats have extension-limiting means (16b, ..., 18a, 18b, ...) to limit the extent to which each slat fans out in relation to the adjacent slats.

7. A device according to claim 6, characterised in that said extension-limiting means comprise a circumferential slot or groove (16b, ..., 16n) in each slat, the grooves in adjacent slats being staggered radially, and groove-engaging pins (18a, 18b, ..., 18n) on said slats, each pin of a slat engaging with a groove in an adjacent slat.

8. A device according to claim 2, characterised in that at least the first and last slat comprise locking means (20) for locking said slats to one another.

9. A device according to claim 2, characterised in that at least the first and last slat comprise engaging knobs (22a, 22n) for facilitating opening and closing operations.
